# EUROPEAN PATENT SPECIFICATION

(11) **EP 3 088 876 B1**
(45) Date of publication and mention of the grant of the patent: **13.12.2017**
(21) Application number: 16165495.9
(22) Date of filing: 15.04.2016
(51) Int. Cl.: G01B 11/30, G01N 25/72, G01N 21/892, G01N 21/89, G01N 21/896

(54) **MACHINE AND METHOD TO DETECT A SURFACE IRREGULARITY ON A MOVING PANEL**
MASCHINE UND VERFAHREN ZUR ERKENNUNG EINER OBERFLÄCHENUNREGELMÄSSIGKEIT AUF EINEM SICH BEWEGENDEN PANEEL
MACHINE ET PROCÉDÉ POUR DÉTECTER UNE IRRÉGULARITÉ DE SURFACE SUR UN PANNEAU MOBILE

(30) Priority: 28.04.2015 IT TV20150059
(43) Date of publication of application: 02.11.2016
(73) Proprietor: Mart S.r.l., 33080 Porcia (PN) (IT)
(72) Inventor: PIAZZA, Danny, 33080 PORCIA (PN) (IT); NOVELLO, Francesco, 33080 PORCIA (PN) (IT); F. GOEBERT, Joern, 33080 PORCIA (PN) (IT)
(74) Representative: Citron, Massimiliano

(56) References cited:
- EP-A2- 1 975 604
- FR-A- 1 398 216
- JP-B1- 4 209 926
- US-A- 4 996 426
- US-A- 6 100 537
- US-A1- 2008 075 139
- US-B2- 8 506 159

## Description

The invention relates to a machine and method for detecting a surface irregularity present in a layer-pad for bottles.

Layer-pads are used for the transport or storage of bottles, cans or glass objects in place of pallets. The classic and best known one is the alveolar polypropylene layer-pad, available with closed cannulas and rounded corners in different thicknesses and weights.

After use the layer-pads must be washed and sterilized, so there are specialized machines that continuously with and very fast cycle take the layer-pads, rinse them and dry them. See e.g. the machine on https://www.youtube.com/watch?v=k7cR9QxIBCM.

The loading of the layer-pads can take place both manually and automatically, after an inspection phase in which an operator verifies that there are not defects. Among the most common ones there are dents, perforations and, most unwanted, the sticking of foreign bodies inside the layer-pad, almost always glass shards. The pieces of glass may damage the cleaning machine, bring dirt, unbalance the loaded bottles and hide a slot of the cannulas dirt and water get in, to the detriment of the layer-pad's hygiene.

The manual separation of layer-pads with stuck glass is long and expensive, and reduces the hourly yield. Very often the glass just passes the screening unnoticed, ends up in a machine and determines a waste layer-pad at the end of the washing.

FR 1 398 216 describes a sorting system for sheet material, e.g. paper. Photocells illuminate passing sheets and photomultipliers receive the reflected light, from which then the surface quality of the paper is understood.

US 8,506,159 shows a method to find a defect on the surface or surface layer of a steel sheet in motion. The method comprises an algorithm of Laplacian calculation.

To obviate to at least one of these problems is the main object of the invention.

In particular, it is an object to provide a machine easy to produce, but effective and economic.

Another object is to provide a machine or method very reliable in the detection.

One or all the objects are achieved by what is defined in the attached claims.

An aspect of the invention relates to a method for detecting a surface irregularity of, or an infiltration into, a layer-pad, comprising the steps of claim 1. The emission and reception of infrared rays, as chosen suitably for the specific application, allows in a simple and reliable way the detection of foreign bodies and modifications to the internal structure.

Preferably, the infrared rays are sent when the panel is moving, to speed up the system, but the panel may be also still.

The invention is directed to a flat element, on whose flat surface a surface irregularity of an infiltration, or an infiltration, toward the inside must be detected. Such flat element is a layer-pad, preferably for glass objects.

Preferably in the method the infrared rays reflected from the layer pad are received, with the advantage of detecting foreign bodies on its surface. Or in the method the infrared rays that have passed through the layer pad are received, in order to detect the infiltrations or anomalies in its internal structure.

To simplify the system, lower the cost thereof and facilitate the highspeed recognition functioning, received infrared rays are processed to identify a point of maximum or minimum temperature on a surface of the panel, to the point corresponding an irregularity or infiltration. The determination of hot and/or cold areas does not require too much computing power but offers excellent guarantees of detection precision. A further aspect of the invention relates to a washing machine for washing layer-pads comprising a device for detecting a surface irregularity of, or infiltration into, a moving layer-pad for the palletized transport of glass objects, the washing machine comprising the features of claim 4. In particular, in the device the source and the receiver may be directed towards the same side of the layer pad, in order to receive the infrared rays reflected from the layer pad.

Or the source and the receiver are placed on opposite sides of the layer pad, so that the receiver receives the infrared rays that have passed through the layer pad.

The device comprises a processing unit, e.g. a programmed microprocessor or a PLC or a microprocessor programmable for the aim, to process the received infrared rays and identify a point of maximum or minimum temperature on a surface of the layer pad, to the point corresponding an irregularity or infiltration. Identified one or more points in the area hit by the electromagnetic waves, and e.g. by calculating the bands or areas where there are such points, various advantageous functions in the device can be implemented, such as for example:
- the sending of a signal, e.g. an alarm or warning signal, as soon as a point corresponding to an undesired non-uniformity or infiltration is detected,
- the counting of the defects,
- the sending of a signal to discard the panel with the defect.

Tremendous advantages have been obtained since the method and in the machine with the infrared rays. These rays are not sensitive to the color or the material of the panel, and therefore avoid the systemic complications, necessary to adapt the system to the various types of panel, which raise a lot the installation cost.

Tremendous advantages have been obtained with the method or the machine for the layer-pads for palletized transport of glass objects. In the layer-pad washing technology, as described in the introduction, the problem of foreign bodies or the water infiltration is felt a lot and causes inefficiency.

Preferably the machine comprises a sliding plane for the panel or a layer-pad, and the source and the receiver of said device are placed at, and facing, the same side of the panel or a layer-pad. Or the source and the receiver of said device are directed towards, and placed at, opposite sides of the panel or layer-pad.

The advantages of the invention will be more apparent from the following description of a preferred embodiment of machine and method, making reference to the attached drawing wherein:
Figures 1-2 show a schematic view of a detection device mountable on a machine as in fig. 3;
Fig. 3 shows a simplified partial side view of a washing machine for layer-pads.

In the figures identical numbers indicate identical or conceptually similar parts, and the machine, device and method are described as in use.

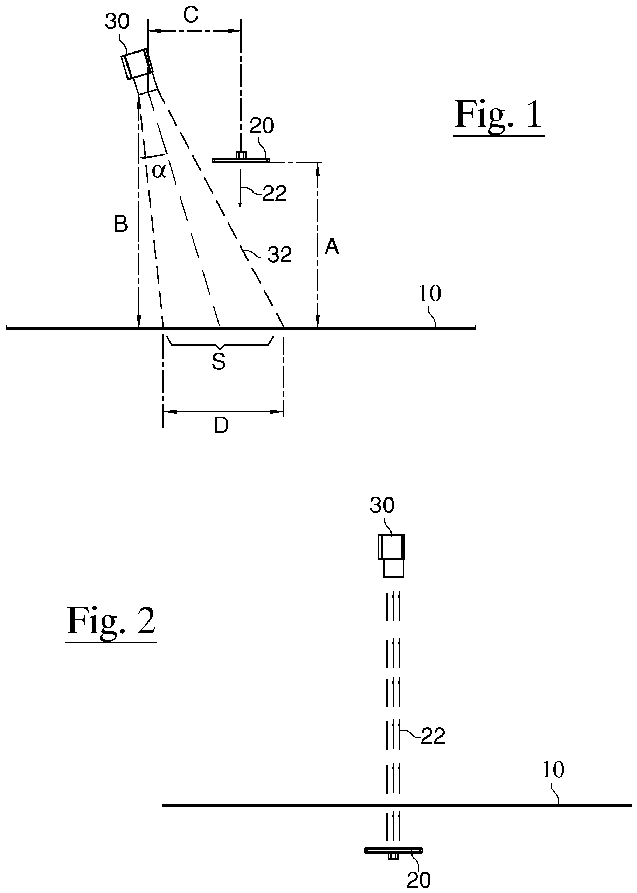

The principle of operation of the method and of the device is shown in Fig. 1 and Fig. 2.

To detect the presence of glass or surface dents on a layer-pad, the latter is passed above or below a source 20 of infrared rays 22 (Fig. 1). An area S irradiated on the layer-pad 10 is shot by a thermo-camera 30 and processed digitally.

The source 20 and the thermo-camera 30 are positioned to be oriented towards the same side of the layer-pad 10, so that the thermo-camera 30 receives the rays 22 reflected by the layer-pad 10.

A camera management software 30 is able to create a digital mapping of the area S and to identify inside it the point or sub-area of maximum and/or minimum temperature. It is enough, e.g. by a device start-up test or e.g. by trial, to suitably set thresholds for the value of the measured temperature to detect the presence of a piece of glass or foreign body on the layer-pad 10.

In particular a piece of glass in the area S appears as a maximally-cold point.

A dent or break in the area S appears as a maximally-cold point.

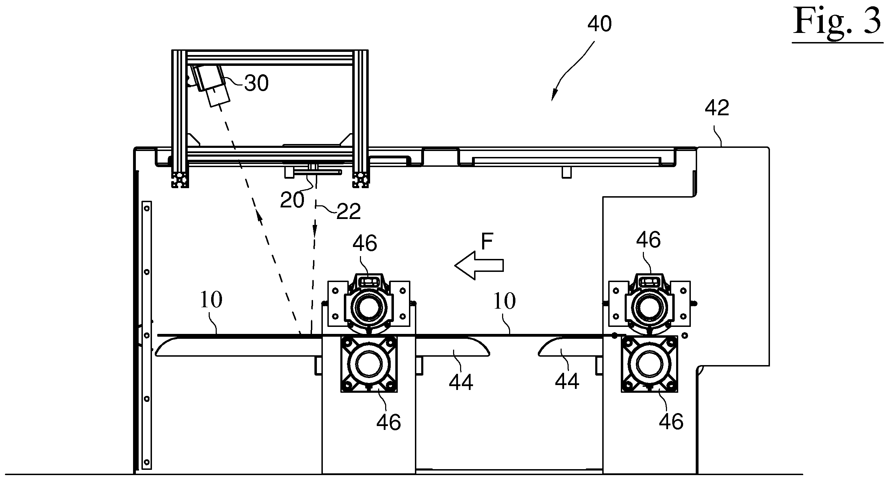

The detection speed is important in this application example, given that the layer-pad 10 advances in a washing machine (Fig. 3) with a high speed of 30 m/min. Slowing the layer-pad 10 to allow the image processing is commercially impractical.

With reference to Fig. 1 the following resulted experimentally as optimal parameters, compared to the size of the pieces to be detected:
- distance A between source 20 and layer-pad 10 = 200 mm to 500 mm, preferably 350 mm;
- distance B between the thermo-camera 32 and the layer-pad 10 = 450 mm to 700 mm, preferably 600 mm (considering 600 mm for the surface to be analyzed and 2 x 2 x 2 cm the area of the smaller piece that can be detected);
- distance C between source 20 and thermo-camera 30 = 150 mm to 350 mm, preferably 200 mm, though variable with the angle of the thermo-camera 30. Such angle is preferred to be increased as distance C increases, therefore the two things are correlated. We can say that the point of intersection between the interaxle spacing K of the visual field of the thermo-camera 30 and the layer-pad 10 is preferred to be always the same regardless of the distance C and angle α;
- power of source 20 = 250 Watt (but it may also depend on distance A and the temperature of the layer-pad 10);
- the amplitude D of the vision field (or the angle a) is inversely proportional to the processing speed of the thermo-camera 30 and proportional to the speed of the layer-pad 10. Adequate values, e.g. when the amplitude D is wide little more than 100 mm and it is better to exploit it the most, are 80 mm to the whole field of the thermo-camera 30, preferably 100 mm. The visual opening of the thermo-camera 30, indicated by the edges 32, is preferably of an angle α, with respect to the central axis K, which goes from 10° to 30°, preferably about 20°.

Note that for the whole extension of the surface S there must be no obstacles or objects between the thermo-camera 30 and the surface S.

Fig. 2 shows another advantageous arrangement for the components of the device.

This time the source 20 and the thermo-camera 30 are positioned on opposite sides of the layer-pad 10, so that the thermo-camera 30 is able to receive the emitted rays 22 that pass through the layer-pad 10.

The rays 22 can pass through the material of the layer-pad 10 only if it is clean or free. Therefore, the thermo-camera 30 will detect
a cold point or area in the presence of a foreign body on the layer-pad 10; or
a hot point in the presence of a pass-through hole.

For this second system or device, the thickness of the layer-pad 10 may be e.g. 1 mm, and in dependence of thicknesses or different materials the power of the source 20 is adjusted. The color of the material as well may determine the power of the source 20, because, for example, black tends to absorb energy, opposite case for white.

The system or device of Fig. 2 has the great advantage of being able to detect if the layer-pad 10, when it has a honeycomb structure, contains water or other inside the cannulas or alveoli, e.g. following a breakage. Standing water is symptom for a hygienic problem or excessive wear, therefore the layer-pad thus detected can be discarded and maximum cleaning quality ensured.

FIG. 3 shows a cross-section of a machine 40 which incorporates the system of Fig. 1. On a frame or housing 42 is mounted a raised sliding plane 44 on which the layer-pads 10, driven by rotating rollers 46, can advance continuously one behind the other in the advancement direction F.

The source 20 sends infrared rays 22 towards the surface of the layer-pad 10 and the thermo-camera 30 detects the reflected rays. The recognition process is analogous to that already described for FIG. 1.

Infrared rays have had better results than visible or ultraviolet light because they are insensitive to the object's color that reflects them. In fact the plants that clean layer-pads must handle many color variations, both with regard to the reflective surface and for the pieces to be detected.

Furthermore the infrareds have the advantage that the managing software of the camera 30 is sufficiently simple.

After a faulty layer-pad has been detected, one can choose to discard it or to automatically intervene e.g. to remove the extraneous piece.

## Claims

1. Method for detecting a surface irregularity of, or infiltration into, a polypropylene layer-pad (10) for the palletized transport of glass objects, comprising the steps of
(i) emitting infrared rays from a source (20) of infrared rays (22) towards the layer-pad (10);
(ii) receiving the infrared rays with a thermo-camera (30) after they have hit the layer-pad (10); and
(iii) processing the received infrared rays to identify a point of maximum or minimum temperature on a surface of the layer pad, to the point corresponding an irregularity or infiltration.

2. Method according to claim 1, wherein the infrared rays reflected (22) from the panel or the infrared rays that have passed through (22) the panel, are received.

3. Method according to claim 1 or 2, wherein a piece of glass in an area (S) is detected as a maximally-cold point, and a dent or break in the area (S) is detected as a maximally-cold point.

4. Washing machine (40) for washing layer-pads (10), comprising
a device for detecting a surface irregularity of, or infiltration into, a moving layer-pad (10) for the palletized transport of glass objects, the device comprising
a source (20) for emitting infrared rays (22) towards the layer-pad; and
a thermo-camera (30) for receiving infrared rays after they have hit the panel, wherein the device comprises
a processing unit to process the received infrared rays and identify a point of maximum or minimum temperature on a surface of the layer-pad,
to the point corresponding an irregularity or infiltration so that
a piece of glass in an area (S) is detected as a maximally-cold point, and a dent or break in the area (S) is detected as a maximally-cold point.

5. Machine according to claim 4, wherein the source and the thermo-camera are directed towards the same side of the layer pad, in order to receive the infrared rays reflected from the layer pad.

6. Machine according to claim 4, wherein the source and the thermo-camera are placed on opposite sides of the layer pad, so that the thermo-camera receives the infrared rays that have passed through the layer pad.

7. Machine according to claim 5, comprising a sliding plane for layer-pad, and wherein the source and the thermo-camera are placed at, and facing, the same side of the layer-pad.

8. Machine according to claim 6, comprising a sliding plane for layer-pad, and wherein the source and the thermo-camera are directed towards, and placed at, opposite sides of the layer-pad.

## Patentansprüche

1. Ein Verfahren zur Erkennung einer oberflächlichen Ungleichmäßigkeit von - oder einer Infiltration in - einem Füllmaterial (10) aus Polypropylen für den Transport auf Paletten von Glasgegenständen, einschließlich der Phasen,
(I) Infrarotstrahlung von einer Quelle (20) an Infrarotstrahlung (22) zum Füllmaterial (10) zu emittieren,
(Ii) Infrarotstrahlung mit einer Wärmebildkamera (30) zu empfangen, nachdem sie auf das Füllmaterial (10) aufgetroffen ist; und
(Iii) die empfangene Infrarotstrahlung zu verarbeiten, um eine Stelle der Maximal- oder Minimaltemperatur auf einer Oberfläche des Füllmaterials zu bestimmen, an der Stelle, die einer Ungleichmäßigkeit oder Infiltration entspricht.

2. Verfahren nach Anspruch 1, wobei die von der Platte reflektierte Infrarotstrahlung (22) empfangen wird oder die Infrarotstrahlung empfangen wird, welche die Platte durchquert (22) hat.

3. Verfahren nach Anspruch 1 oder 2, wobei ein Stück Glas in einem Bereich (S) als vorwiegend kälteste Stelle erkannt wird, und eine Unebenheit oder Überschreitung im Bereich (S) als eine vorwiegend kälteste Stelle erkannt wird.

4. Eine Waschmaschine (40) zum Reinigen von Füllmaterialien (10), umfassend
eine Vorrichtung zur Erkennung einer oberflächlichen Ungleichmäßigkeit von - oder einer Infiltration in - einem Füllmaterial (10), das sich für den Transport auf Paletten von Glasgegenständen in Bewegung befindet, einschließlich
einer Quelle (20), um Infrarotstrahlung (22) zum Füllmaterial (10) zu emittieren, und
einer Wärmebildkamera (30), um Infrarotstrahlung zu empfangen, nachdem sie auf das Füllmaterial (10) aufgetroffen ist; und
wo die Vorrichtung
eine Verarbeitungseinheit umfasst, um die elektromagnetischen Wellen zu verarbeiten, die an einer Stelle von maximaler oder minimaler Temperatur an einer Oberfläche vom Füllmaterial empfangen und bestimmt werden,
an der Stelle, die einer Ungleichmäßigkeit oder Infiltration entspricht, so dass
ein Stück Glas in einem Bereich (S) als vorwiegend kälteste Stelle erkannt wird, und eine Unebenheit oder Überschreitung im Bereich (S) als eine vorwiegend kälteste Stelle erkannt wird.

5. Maschine nach Anspruch 4, wobei die Quelle und die Wärmebildkamera (30) zur gleichen Seite des Füllmaterials gerichtet sind, um die vom Füllmaterial reflektierte Infrarotstrahlung zu empfangen.

6. Maschine nach Anspruch 4, wobei die Quelle und die Wärmebildkamera auf den gegenüberliegenden Seiten vom Füllmaterial angeordnet sind, so dass die Wärmebildkamera, die Infrarotstrahlung empfängt, die das Füllmaterial durchquert hat.

7. Maschine nach Anspruch 5, umfassend eine Gleitebene für Füllmaterial, und wobei die Quelle und die Wärmebildkamera entsprechend der und zur gleichen Seite vom Füllmaterial gerichtet angeordnet sind.

8. Maschine nach Anspruch 6, einschließlich einer Gleitebene für Füllmaterial, und wobei die Quelle und die Wärmebildkamera entsprechend der und zu den gegenüberliegenden Seiten vom Füllmaterial gerichtet angeordnet sind.

## Revendications

1. Méthode de détection d'une non-uniformité superficielle sur - ou d'une infiltration dans - un intercalaire (10) en polypropylène destiné au transport palettisé d'objets en verre, comprenant les phases suivantes :
(i) émission de rayons infrarouges à partir d'une source (20) de rayons infrarouges (22) en direction de l'intercalaire (10),
(ii) réception des rayons infrarouges au moyen d'une caméra thermique (30) une fois que ces derniers ont frappé l'intercalaire (10) et
(iii) traitement des rayons infrarouges captés en vue d'identifier un point de température maximale ou minimale sur une surface de l'intercalaire, au point correspondant à une non-uniformité ou à une infiltration.

2. Méthode selon la revendication 1, dans laquelle sont captés les rayons infrarouges réfléchis (22) par le panneau ou les rayons infrarouges ayant traversé (22) le panneau.

3. Méthode selon la revendication 1 ou 2, dans laquelle un morceau de verre situé dans une zone (S) est détecté comme un point éminemment froid, de même qu'une bosse ou un enfoncement situé(e) dans la zone (S) est détecté(e) comme un point éminemment froid.

4. Machine (40) de lavage pour le nettoyage d'intercalaires (10), comportant un dispositif de détection d'une non-uniformité superficielle sur - ou d'une infiltration dans - un intercalaire (10) en mouvement destiné au transport palettisé d'objets en verre, le dispositif comprenant
une source (20) émettant des rayons infrarouges (22) en direction de l'intercalaire (10), et
une caméra thermique (30) permettant de capter les rayons infrarouges une fois que ces derniers ont frappé l'intercalaire (10) ; et
où le dispositif comprend
une unité de traitement permettant de traiter les ondes électromagnétiques captées et d'identifier un point de température maximale ou minimale sur une surface de l'intercalaire,
au point correspondant à une non-uniformité ou à une infiltration, de telle sorte
qu'un morceau de verre situé dans une zone (S) est détecté comme un point éminemment froid, de même qu'une bosse ou un enfoncement situé(e) dans la zone (S) est détecté(e) comme un point éminemment froid.

5. Machine selon la revendication 4, dans laquelle la source et la caméra thermique (30) sont tournées vers le même côté de l'intercalaire, afin de capter les rayons infrarouges réfléchis par l'intercalaire.

6. Machine selon la revendication 4, dans laquelle la source et la caméra thermique sont placées sur les côtés opposés de l'intercalaire, afin que la caméra thermique puisse capter les rayons infrarouges ayant traversé l'intercalaire.

7. Machine selon la revendication 5, comprenant un plan de coulissement par intercalaire, et dans laquelle la source et la caméra thermique sont placées face au même côté de l'intercalaire et tournées vers celui-ci.

8. Machine selon la revendication 6, comprenant un plan de coulissement par intercalaire, et dans laquelle la source et la caméra thermique sont dirigées vers les côtés opposés de l'intercalaire et placées face à ces derniers.
